# EUROPEAN PATENT SPECIFICATION

(11) **EP 0 352 416 B1**
(45) Date of publication and mention of the grant of the patent: **31.08.1994**
(21) Application number: 89108327.1
(22) Date of filing: 09.05.1989
(51) Int. Cl.: F16H 57/02

(54) **Multi-plane setting type reduction gears**
Reduktionsgetriebe mit einer Vielzahl von Befestigungsebenen
Réducteur de vitesse à montage multiplan

(30) Priority: 29.07.1988 JP 99936/88 U
(43) Date of publication of application: 31.01.1990
(73) Proprietor: MITSUBISHI JUKOGYO KABUSHIKI KAISHA, Tokyo 100 (JP)
(72) Inventor: Kobayashi,Toru,Nagoya Machinery Works Mitsubishi, Nakamura-ku Nagoya-shi Aichi-ken (JP); Sonohara, Tsunetoshi Nagoya Mach. Works Mitsubishi, Nakamura-ku Nagoya-shi Aichi-ken (JP)
(74) Representative: Henkel, Feiler, Hänzel & Partner

(56) References cited:
- DE-A- 2 356 209
- DE-A- 2 745 607
- DE-A- 3 030 850
- DE-B- 1 030 131
- DE-B- 1 032 635
- DE-C- 818 716
- FR-A- 1 276 339
- FR-A- 1 568 649
- FR-A- 2 503 309
- FR-A- 2 547 007
- US-A- 1 462 675
- US-A- 2 734 393
- US-A- 3 521 504
- US-A- 4 020 715
- US-A- 4 344 501
- US-A- 4 708 027
- ENGINEERS DIGEST. vol. 46, no. 1, January 1985, LONDON GB page 13 "New concept in worm reduction gear units"

## Description

### BACKGROUND OF THE INVENTION:

### Field of the Invention:

The present invention relates to motor-direct-coupled type reduction gears such as worm reduction gears or the like.

### Description of the Prior Art:

Heretofore, in worm reduction gears of the type that a motor and reduction gears are integrally assembled, a setting plane of a housing accommodating the reduction gears was, in most cases, only one plane. Furthermore, even if it is attempted to make the configuration of the housing as compact as possible by reducing an amount of offset between an output shaft of a motor and a drive shaft of a housing, the number of possible setting planes is at most two. Therefore, in order to adapt a drive shaft of reduction gears to a variety of positions and attitudes with respect to a setting plane, many kinds of housings for exclusive use were still necessitated.

As described above, in the prior art since many kinds of housings for exclusive use were necessitated to adapt to various setting attitudes, a manufacturing cost as well as an expense for maintenance and control was expensive. In addition, since housings for exclusive use adapted to various setting attitudes were employed, sizes and positional dimensions of screw holes or bolt holes for mounting on the setting plane were different, parts relevant to setting would become many kinds, and hence an economical burden on the side of users was large.

FR-A-1 568 649 discloses a housing for reduction gears comprising surfaces formed in a manner that their configuration is very complicated. Due to such complicated configurations of the surfaces of the housing the casting of this housing is not easy and, therefore, very expensive. Further, such complicated configuration of the surface of the housing requires special demands concerning any surface such housing is to be mounted to.

FR-A-2 503 309 describes a reduction gear comprising the features of the preamble of claim 1.

### SUMMARY OF THE INVENTION:

It is therefore one object of the present invention to provide improved reduction gears adapted to be directly coupled to a motor, which can take various positions and attitudes of its drive shaft with respect to a setting plane of a housing of the reduction gears.

This object is solved by a multi-plane setting type reduction gears comprising the features of claim 1.

According to another feature of the present invention, there are provided the above-featured multi-plane setting type reduction gears, in which bolt pockets are provided on two opposed setting planes, and bolt holes for setting use which extend up to the respective bolt pockets are provided on a setting plane adjacent to the two opposed setting planes.

In other words, the inventive concept of the present invention resides in the following points:
(1) A housing of reduction gears is formed in a hexahedron shape, that is, in a housing shape whose 4 - 5 planes can be utilized as a setting plane.
(2) Sizes and machined positions of the setting screw holes on the respective setting planes are made all the same.
(3) In order to facilitate setting, the housing is formed in such structure that members other than a drive shaft may not project from the respective setting planes.

According to the present invention, since a housing of reduction gears is provided with a plurality of setting planes and the positions of the setting screw holes on the respective setting planes are the same, any desired plane of the housing of reduction gears can be set on a wall, a floor or the like.

The above-mentioned and other objects, features and advantages of the present invention will become more apparent by reference to the following description of preferred embodiments of the invention taken in conjunction with the accompanying drawings.

### BRIEF DESCRIPTION OF THE DRAWINGS:

In the accompanying drawings:
Fig. 1 shows a first preferred embodiment of the present invention, Fig. 1(a) being a front view, Fig. 1(b) being a right side view, and Fig. 1(c) being a bottom view;
Figs. 2(a) to 2(e) are schematic views showing different set attitudes of the apparatus shown in Fig. 1;
Fig. 3 shows a second preferred embodiment of the present invention, Fig. 3(a) being a front view, Fig. 3(b) being a right side view, and Fig. 3(c) being a bottom view; and
Fig. 4(a) to 4(e) are schematic views showing different set attitudes of the apparatus shown in Fig. 3.

### DESCRIPTION OF THE PREFERRED EMBODIMENTS:

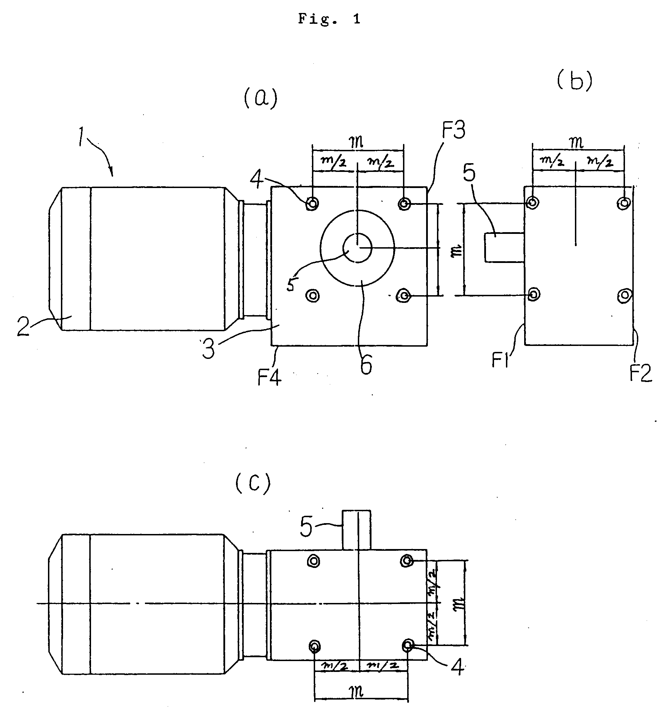

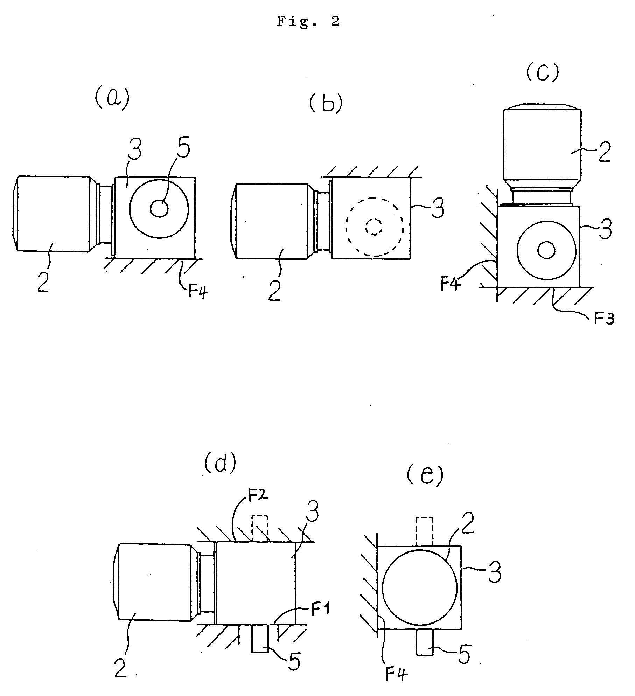

Now a first preferred embodiment of the present invention will be described with reference to Figs. 1 and 2. In these figures, reference numeral 1 designates worm reduction gears directly coupled to a motor 2, in which a housing 3 accommodating reduction gear mechanisms not shown is formed in a rectangular parallelepiped shape having six planes, among which one plane is an exclusive plane for mounting the motor 2, and among the remaining 5 planes, 4 planes consisting of setting planes F1 - F4 are available as setting planes.

On one plane F1 among the above-mentioned 4 planes available as setting planes of the housing 3 of regular parallelepiped shape, is provided a drive shaft 5 directed in the direction perpendicular to the direction of the center axis of the motor 2 (that is, the direction of connecting the motor 2 and the housing 3).

On each of the setting planes F1 - F4 are provided four setting screw holes 4, and the sizes of the mounting screw holes on these setting planes, the interval m between the setting screw holes and the array of them are all common to the respective setting planes F1 - F4.

On each of the above-mentioned setting plane F1 and the setting plane F2 opposed thereto, are disposed four setting screw holes 4 at the respective apexes of a square having the above-mentioned drive shaft 5 disposed at its center and its respective sides directed in parallel to the sides (edge lines) of the respective planes F1 and F2 and having a side length of m. Also, on each of the other setting planes F3 and F4, are disposed four setting screw holes 4 at the respective apexes of a square having the center axis of the motor 2 disposed at its center and its respective sides directed in parallel to the sides (edge lines) of the respective planes F3 and F4 and having a side length of m.

In these figures, reference numeral 6 designates side covers mounted on the setting planes F1 and F2, respectively, and in the side cover 6 on the setting surface F1 is formed a hole through which the drive shaft 5 extends, while in the side cover 6 on the setting plane F2 from which the drive shaft 5 does not project, is not formed a through-hole. The aforementioned both side covers 6 are designed so as not to project from the respective setting planes F1 and F2.

The reduction gears according to the illustrated embodiment can have its housing 3 set on a floor, a ceiling, a wall or the like at various attitude via any one of the setting planes F1 - F4 by the intermediary of screws threadedly mated with the above-mentioned setting screw holes 4.

Fig. 2 shows a variety of setting attitudes, a state of reduction gears set on a floor is shown at (a), a state of reduction gears set on a ceiling is shown at (b), a state of reduction gears set on a wall or a floor is shown at (c), a state of reduction gears set on a ceiling or a floor is shown at (d), and a state of reduction gears set on a wall is shown at (e).

It is to be noted that while the drive shaft 5 is provided on the setting plane F1 in the illustrated first embodiment, it is also possible to provide drive shafts on both the setting planes F1 and F2 or to provide a drive shaft selectively either on the setting plane F1 or on the setting plane F2. In Figs. 2(d) and 2(e), the case where the drive shaft is provided on the setting plane F2 is illustrated by dotted lines.

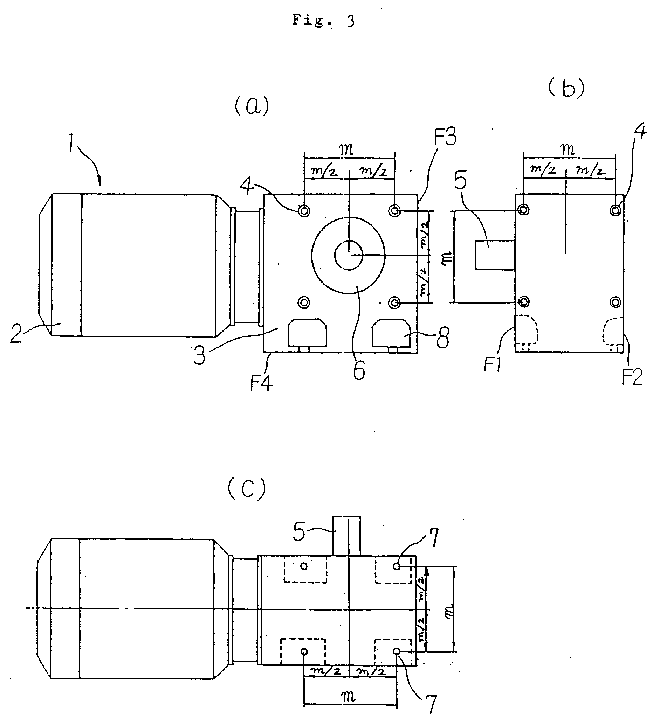

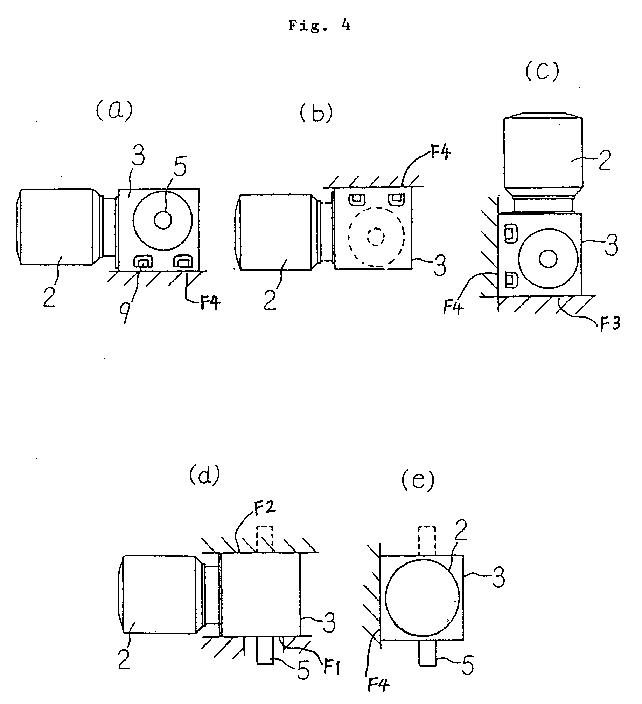

Next, a second preferred embodiment of the present invention is shown in Figs. 3 and 4. In these figures, reference numeral 1 designates worm reduction gears directly coupled to a motor 2, in which a housing 3 accommodating reduction gear mechanisms not shown is formed in a rectangular parallelepiped shape having six planes, among which one plane is an exclusive plane for mounting the motor 2, and among the remaining 5 planes, 4 planes consisting of setting planes F1 - F4 are available as setting planes.

The structure of the housing 3 according to this preferred embodiment is similar to that in the above-described first preferred embodiment except for the following points.

In this preferred embodiment, since it is intended that the setting plane F4 can be most frequently used, two bolt pockets 8 are provided on the setting planes F1 and F2, respectively, and on the setting plane F4 are disposed threaded holes 7 for bolts which penetrate up to the bolt pockets 8, so that fastening of bolts 9 inserted into these threaded holes 7 can be performed from the side of the housing. It is to be noted that on the setting planes F1 - F3 are disposed setting screw holes 4 similar to those of the first preferred embodiment, and that the positions and array of the threaded holes 7 for the bolts on the setting plane F4 are made similar to those of the setting screw holes 4 on the setting plane F4 in the first preferred embodiment.

According to the second preferred embodiment, while the housing 3 can be set on a floor, a ceiling, a wall or the like via the setting plane F1, F2 or F3 by the intermediary of setting bolts similarly to the first preferred embodiment, in the case of setting the housing 3 via the most frequently available setting plane F4, the bolts 9 can be easily fastened from the side of the housing by making use of the bolt pockets 8 provided on the setting planes F1 and F2.

Fig. 4 shows a variety of setting attitudes, a stage of reduction gears set on a floor is shown at (a), a state of reduction gears set on a ceiling is shown at (b), a state of reduction gears set on a wall or a floor is shown at (c), a state of reduction gears set on a ceiling or a floor is shown at (d), and a state of reduction gears set on a wall is shown at (e).

It is to be noted that while a housing of rectangular parallelepiped shape was employed in the above-described first and second preferred embodiments, depending upon the structure of the floor, ceiling and wall on which the reduction gears are to be set, a hexahedron shape other than a rectangular parallelepiped shape can be employed. Furthermore, modification could be made such that the housing could be mounted on a base plate via setting screws or bolts and the base plate could be fixedly secured to a floor, a ceiling or a wall, without being directly mounted to a floor, a ceiling or a wall.

As will be apparent from the detailed description of the preferred embodiments of the present invention above, according to the present invention the following advantages are obtained owing to the fact that a housing accommodating reduction gears directly coupled to a motor is formed in a hexahedron shape and setting holes are provided on the respective planes of the housing through which the housing is not directly coupled to a motor:
(1) Only one kind of housing can be adapted to various modes of setting, and so, a manufacturing cost becomes cheap.
(2) On the side of the users also, common use of a setting bracket becomes possible, and hence the improved reduction gears according to the present invention can contribute to rationalization in the aspects of design and manufacture. (Especially in the case of disposing a plurality of reduction gears at different setting attitude, it is true.)
(3) In a plant or the like, often reduction gears are used at various setting attitude, and in such cases with the reduction gears according to the present invention, one kind of reduction gears can be adapted to the setting requirements.

## Claims

1. Multi-plane setting type reduction gears, comprising a drive shaft (5), a housing (3) for reduction gears adapted to be directly coupled to a motor (2) having a motor shaft and being formed in a hexahedron shape with respective setting planes (F1-F4) to set the housing (3) on a support and through which the reduction gears are not directly coupled to the motor (2), wherein four planar setting planes (F1-F4) are provided and each of said four planar setting planes (F1-F4) defines a plurality of setting holes (4) therein,
characterized in that
the plurality of setting holes (4) is arrayed in the same pattern and relative spacing in each of said four planar setting planes (F1-F4),
the positions of setting holes (4) on each setting plane (F1-F4) are symmetrical with respect to the center of said drive shaft (5) or the center of said motor shaft and
the surface of the housing (3) is flat.

2. Multi-plane setting type reduction gears as claimed in claim 1, characterised in that bolt pockets (8) are provided on two opposed setting planes (F1, F2) and bolt holes (7) for setting use which extend up to said respective bolt pockets (8) are provided on a setting plane (F4) adjacent to said two opposed setting planes (F1, F2).

## Patentansprüche

1. Untersetzungsgetriebe mit mehreren Anbauflächen, umfassend: eine Antriebswelle (5) und ein Untersetzungsgetriebe-Gehäuse (3), das mit einem eine Motorwelle aufweisenden Motor (2) unmittelbar koppelbar (an diesem anflanschbar) und mit einer Hexaederform mit jeweiligen Anbauflächen (F1 - F4) zum Ansetzen oder Anbauen des Gehäuses (3) an einer Traganordnung ausgebildet ist, an welchen Anbauflächen das Untersetzungsgetriebe nicht unmittelbar mit dem Motor (2) gekoppelt ist oder wird, wobei vier plane Anbauflächen (F1 - F4) vorgesehen sind, von denen jede mit einer Anzahl von Anbau-Schraubenbohrungen (4) versehen ist,
dadurch gekennzeichnet, daß
die mehreren Anbau-Schraubenbohrungen (4) in jeder der vier planen Anbauflächen (F1 - F4) jeweils im gleichen Muster und mit dem gleichen Relativabstand angeordnet sind,
die Lagen der Anbau-Schraubenbohrungen (4) in jeder Anbaufläche (F1 - F4) zum Zentrum der Antriebswelle (5) oder zum Zentrum der Motorwelle symmetrisch sind und
die Oberfläche des Gehäuses (3) flach ist.

2. Untersetzungsgetriebe mit mehreren Anbauflächen nach Anspruch 1, dadurch gekennzeichnet, daß an bzw. in zwei gegenüberliegenden Anbauflächen (F1, F2) Schraubentaschen (8) vorgesehen sind und an bzw. in einer Anbaufläche (F4) neben den beiden gegenüberliegenden Anbauflächen (F1, F2) Schrauben- oder Schraubbolzenbohrungen (7) für Anbauzwecke, die bis zu den jeweiligen Schraubentaschen (8) verlaufen, vorgesehen sind.

## Revendications

1. Réducteurs du type à montage multi-plan, comprenant un arbre d'entraînement (5), un carter (3) qui est destiné à loger des engrenages de réduction pouvant être couplés directement à un moteur (2) ayant un arbre moteur et qui a une forme d'hexaèdre avec des plans respectifs de montage (F1-F4) pour monter le carter (3) sur un support et grâce auxquels les engrenages de réduction ne sont pas couplés directement au moteur (2), dans lequel quatre plans plats de montage (F1-F4) sont prévus et chacun desdits quatre plans plats de montage (F1-F4) est pourvu d'une pluralité de trous de montage (4),
caractérisé en ce que:
- la pluralité de trous de montage (4) est disposée suivant le même motif et le même espacement relatif dans chacun desdits quatre plans plats de montage (F1-F4),
- les positions des trous de montage (4) dans chaque plan de montage (F1-F4) sont symétriques par rapport au centre dudit arbre d'entraînement (5) ou au centre dudit arbre moteur, et
- la surface du carter (3) est plate.

2. Réducteurs du type à montage multi-plan selon la revendication 1, caractérisé en ce que des alvéoles à boulons (8) sont ménagées sur deux plans de montage (F1, F2) opposés et des trous de boulons (7) destinés au montage, qui vont jusqu'auxdites alvéoles à boulons (8) respectives, sont ménagés sur un plan de montage (F4) adjacent auxdits deux plans de montage opposés (F1, F2).
